# EUROPÄISCHE PATENTSCHRIFT

(11) **EP 1 081 120 B1**
(45) Veröffentlichungstag und Bekanntmachung des Hinweises auf die Patenterteilung: **22.11.2006**
(21) Anmeldenummer: 00118972.9
(22) Anmeldetag: 01.09.2000
(51) Int. Cl.: C04B 38/00, C04B 35/119

(54) **Poröse Aluminiumoxidstrukuren und Verfahren zu ihrer Herstellung**
Porous aluminium oxid based structure and process for its production
Structure poreux à base d'oxyde d'aluminium et procédé de production

(30) Priorität: 03.09.1999 DE 19943075
(43) Veröffentlichungstag der Anmeldung: 07.03.2001
(73) Patentinhaber: Fraunhofer-Gesellschaft zur Förderung der angewandten Forschung e.V., 80686 München (DE)
(72) Erfinder: Krell, Andreas, Dr., 01217 Dresden (DE); Buse, Frank, 01159 Dresden (DE); Ma, Hongwei, 01257 Dresden (DE)
(74) Vertreter: Rauschenbach, Marion

(56) Entgegenhaltungen:
- EP-A- 0 479 553
- EP-A- 1 204 597
- US-A- 3 910 851
- RIOU S ET AL: "Zirconia-Alumina Particulate Composites by Infiltration Processing" CERAMICS INTERNATIONAL, ELSEVIER APPLIED SCIENCE PUBL, BARKING, ESSEX, GB, Bd. 21, Nr. 5, 1995, Seiten 339-343, XP004040573 ISSN: 0272-8842

## Beschreibung

Die Erfindung bezieht sich auf das Gebiet der technischen Keramik und betrifft poröse Alumniniumoxidstrukturen und ein Verfahren zu ihrer Herstellung, wie sie beispielsweise als mesoporöse Filtrationsmembranen, als gröberstrukturierte Zwischenschichten oder Filter-Substrate wie auch als Katalysator-Substrate Verwendung finden.

Filtermodule aus Al₂O₃ werden seit längerem angeboten, wobei ein mehrschichtiger Aufbau mit abgestufter Porengröße typisch ist. Während allerdings grobporöse oxidkeramische Filter-Substrate meist aus Korund (α-Al₂O₃) bestehen, ggf. mit gewissen Glasanteilen als Binder, sind für die üblicherweise mit Sol/Gel-Verfahren (d.h. ausgehend von Precursoren des Al₂O₃) aufgebrachten Trennschichten im anwendungstechnisch interessanten mesoporösen Bereich von ca. 20-60 nm vorwiegend Werkstofflösungen aus Übergangstonerden bekannt (γ-, δ-, oder κ-Al₂O₃). Wegen der im Vergleich zu α-Al₂O₃ ungünstigeren chemischen und thermischen Beständigkeit der Übergangstonerden ist aber eine Ausführung in reinem Korund anzustreben.

Die Herstellung auch der gröberstrukturierten Zwischenschichten, die z.B. zwischen einer aus 80-nm-Partikeln bestehenden Trennschicht und dem Substrat mit 1-2 µm Porengröße zu vermitteln haben, auf dem Sol/Gel-Weg wäre technologisch mit Vorteilen verbunden, scheitert aber bisher daran, daß keine Verfahren bekannt sind, um *mittels Sol*/*Gel*-Techniken zu Al₂O₃-Strukturen zu gelangen, die eine ausreichende Porengröße von mehr als 50-100 nm mit einer noch ausreichend hohen Porosität > 30 Vol-% bzw. vorzugsweise > 40 Vol.-% verbinden. Typischerweise liefern die bekannten Sol/Gel-Verfahren nur feinere, mesoporöse Strukturen, die dann aus den o.a. Übergangsphasen des Al₂O₃ bestehen. Wenn diese Strukturen im Interesse einer Porenvergröberung bei höheren Temperaturen geglüht werden, so tritt nennenswertes Porenwachstum erst mit dem Übergang zur thermodynamisch stabilen Korundphase auf und ist dabei von einen plötzlichen Zusammenbruch der Porosität auf gebrauchsmindernd geringe Werte verbunden.

*Pulver*-Technologien, die von Al₂O₃-Pulvern anstelle von Precursoren ausgehen, sind ebensowenig zur Herstellung poröser Schichten der genannten Art nutzbar, da Schichten aus Pulvern der Korngrößen 0,1-1 µm (erzeugt z.B. per Tauchbeschichtung in Pulver-Schlickern) schon im noch ungesinterten Zustand eine zu hohe Packungsdichte aufweisen und zumindest keine Verbindung von Porengrößen des Bereiches 100-500 nm mit Porositäten > 40 Vol.-% zulassen.

Der Stand der Technik kennt somit keine Lösung für die Herstellung mesoporöser Al₂O₃-Strukturen hoher Porosität, die bei mittleren Porengrößen von 20-60 nm aus Korund bestehen.
Auch sind keine Lösungen zur Herstellung gesinterter hochporöser Al₂O₃-Strukturen mit gröberen Porengrößen zwischen 50 und 1000 nm bekannt, die auch für Sol/Gel-Verfahren anwendbar wären.

Wenn die gesuchte Lösung der genannten Probleme für Sol/Gel-Verfahren zur Herstellung von Zwischenschichten aus kommerziellen Precursoren (wie dem Böhmit "Disperal" der Fa. Condea Chemie, Hamburg) nutzbar sein soll, so muß bei hoher und im Zuge der Glühung auf hohem Niveau verbleibender Porosität ein erheblicher Materialtransport ermöglicht werden. Solcher Böhmit weist nämlich Primärteilchengrößen von 2-7 nm und Agglomeratgrößen um 30-60 nm auf und wird somit einerseits unter üblichen Glühbedingungen zu *kleineren Poren* führen, als hier angestrebt. Sol/Gel-Verfahren, die von solchem Böhmit ausgehen, sind andererseits dafür bekannt, daß kleine Partikelgröße und starke Oberflächenkrümmung der Teilchen zu hoher Sinteraktivität führen und das *Dichtsintern* fördern. Im Rahmen der bekannten Theorien des Festphasensinterns ist daher nicht zu erwarten, daß die Überwindung der o.a. Probleme bei der Herstellung von mesoporösen Korundstrukturen und von Gefügen mit gröberen Porengrößen von 50-1000 nm bei gleichbleibend hoher Porosität überhaupt möglich ist: erhebliches Porenwachstum ist danach mit Kornwachstum verbunden, und letzteres geht nach den gültigen Vorstellungen stets mit einer deutlichen Verringerung der Restporosität einher. So wird nach Coble der Sinterprozeß in drei Stadien eingeteilt (J. Appl. Physics 32(1961)5, 787-792):
- Eingangsstadium, gekennzeichnet durch ein Wachstum der Sinterhälse von Null auf eine Fläche, die 1/2 der Querschnittsfläche der Partikel entspricht. Der Vorgang ist begleitet von wenigen Prozent Schwindung, die aber - ohne daß ein nennenswertes Wachstum der Partikel überhaupt möglich ist - bereits einem Abbau der Porosität von ursprünglich typischen 40-50 % (bei 50-60 % relativer Gründichte) auf 30-40 % entsprechen. Bei Glühungen sinkt die Porosität also bereits im Anfangsstadium des Sinterns und ohne Korn- oder Porenwachstum auf Werte, die für viele hochporöse Produkte die Grenze der Nutzbarkeit markieren.
- Das Zwischenstadium beginnt, wenn erstes (moderates) Kornwachstum und eine Änderung der Porenform den Übergang zu einer Struktur mit Poren und größeren Anteilen an Korngrenzen auslösen. Der überwiegende Anteil der Porosität ist offen, eine im Zuge des Sinterns fallende Porosität ist mit schrumpfenden zylindrischen Porenkanälen bei insgesamt noch geringem Kornwachstum verbunden (Johnson nimmt für sein Modell des Zwischenstadiums eine konstante Partikelgröße an [J. A. Ceram. Soc. 53(1970)10, 574-577], Messungen zeigen in MgO-dotiertem Al₂O₃ ein Kornwachstum von 300 auf 660-850 nm verbunden mit einer Halbierung der Porosität [Greskovich u.a, J. Am. Ceram. Soc. 55(1972)142-146]).
- Das Endstadium beginnt mit dem Übergang zu geschlossener Porosität und ist mit verstärktem Kornwachstum und einer Vergrößerung der mittleren Porengröße (bei starker Abnahme der Porosität) verbunden.

Es ist Aufgabe der Erfindung, poröse Aluminiumoxidstrukturen anzugeben, die bei einer hohen Porosität mesoporöse Porenstrukturen mit einer mittleren Größe im Bereich von 20 - 60 nm oder auch gröbere mittlere Porengrößen bis 1000 nm aufweisen und aus α-Al₂O₃ bestehen können. Unter Porengröße werden hierbei mittlere "effektive" Porendurchmesser verstanden, wie sie sich z.B. mit üblichen Auswertemethoden aus quecksilber-porosimetrischen Messungen ergeben (da reale offene Porenstrukturen keine ideale Kugel- oder Zylinderform aufweisen können, liegt kein wirklicher "Durchmesser" vor, der Porendurchmesser ergibt sich vielmehr als Effektivwert unter Zugrundelegung bekannter geometrischer Modelle).
Derartige poröse Aluminiumoxidstrukturen sollen sowohl pulvertechnisch und auch mit der Sol-Gel-Technik hergestellt werden können. Weiterhin sollen die porösen Aluminiumoxidstrukturen auch über den gesamten Porengrößenbereich aus α-Al₂O₃ herstellbar sein.

Die Aufgabe wird durch die in den unabhängigen Ansprüchen angegebenen Merkmale gelöst. Vorteilhafte Weiterbildungen finden sich in den abhängigen Ansprüchen.

Die erfindungsgemäßen porösen Aluminiumoxidstrukturen weisen eine Zr-haltige Dotierung auf.

Das erfindungsgemäße Verfahren zur Herstellung von porösen Aluminiumoxidstrukturen besteht im Hinzufügen einer Zr-haltigen Dotierung während der Herstellung in einer Konzentration, die ausgedrückt als ZrO₂ und bezogen auf Al₂O₃ 0,03- < 5 Masse-% ausmacht.

Durch das erfindungsgemäße Herstellungsverfahren können poröse Aluminiumoxidstrukturen hergestellt werden, welche insbesondere die folgenden Merkmale aufweisen:
- eine offene Porosität > 30 %
- eine mittlere Porengröße von 20 - 1000 nm
- einen Zr-Gehalt, der ausgedrückt als ZrO₂ und bezogen auf Al₂O₃ 0,03 - < 5 Masse-% ZrO₂ beträgt.

Die Zr-Zugabe kann auf bekannte Weise und mit bekannten ZrO₂-Rohstoffen oder Precursoren (wie z.B. mit wäßriger Zirkoniumoxyclorid-Lösung) erfolgen und ist somit für Sol/Gel- wie für pulvertechnische Technologien gleichermaßen anwendbar.

Besonders vorteilhafte Ergebnisse im Sinne einer bis zu höheren Glühtemperaturen aufrechterhaltenen hohen Porosität werden durch eine Zugabe zwischen 0,03 Masse-% und 1,5 Masse-% ZrO₂ erzielt. Geringere Zugaben verringern den angestrebten Effekt der Stabilisierung hoher, vorzugsweise 40 Vol.-% übersteigender Porosität im Produkt, höhere Konzentrationen können unerwünschte Nebenwirkungen nach sich ziehen (wie z.B. die Veränderung des chemischen Verhaltens der erzeugten Produkte).

Die hier gefundene Wirkung geringer Zr-Dotierungen (ZrO₂ nach üblicher Luftsinterung) kann gegenwärtig nicht erklärt werden und entspricht auch nicht sonstigen, bekannten Wirkungen dieses Zusatz beim Sintern von Al₂O₃. So wurde zwar berichtet, daß höhere ZrO₂-Anteile das Sintern von Korund fördern (T. Suzuki, JP - 62/21750), geringe Zusätze < 1 % ZrO₂ hingegen beim Heißpressen das Dichsintern (im Bereich sehr kleiner Restporosität) hemmen (K. Bhatia u.a., Pressure assisted sintering of mixtures of alumina/zirconia powders, 23rd Annual Cocoa Beach Conference, The Am. Ceram. Soc., 24-29. 01. 1999, Vortrag S1-061-99); beide Befunde weisen aber nur auf eine in einem Fall *generell* diffusionsbeschleunigende, im anderen Fall diffusionsverzögernde Wirkung unterschiedlicher ZrO₂-Konzentrationen hin. In gleichem Sinne ist eine Schrift von Charles u.a. eines zahlloser Beispiele, die eine das Kornwachstum von Sinterkorund *hemmende* Wirkung geringer ZrO₂-Zusätze (GB - 2 071 073 A und B2) beschreiben.
Im Gegensatz dazu deckt die vorliegende Erfindung gerade Bedingungen für einen überraschend andersartigen Effekt auf, der Glühungen mit stärkerem Poren*wachstum* bei nahezu konstanter Porosität (d.h. *verminderter Verdichtung)* ermöglicht.

Dieser bisher unbekannte Effekt, bei dem Zr oder ZrO₂ vermutlich die Oberfläche des noch hochporösen Al₂O₃ in einer Weise kontaminieren, dass die die *Verdichtung* vorantreibenden Diffusionsprozesse stark verlangsamt werden ohne die zum *Wachstum der Porengröße* führenden Diffusionsvorgänge zu unterbinden, wird hier zur Herstellung hochporöser Al₂O₃-Sinterprodukte definierter Porenstruktur in einer Weise genutzt, die gleichermaßen für pulvertechnische (von Al₂O₃-Pulvern ausgehende) wie für Sol/Gel-Verfahren (ausgehend von Precursoren des Al₂O₃) nutzbar ist.
Dabei kann im Rahmen der Sol/Gel-Verfahren die Rolle der Zr- bzw. ZrO₂-Dotierung für die zu durchlaufenden Phasentransformationen offenbar je nach den jeweiligen Bedingungen unterschiedlich sein: so berichten Vereshtshagin u.a. von einem fehlenden Einfluß von Zr⁴⁺ auf die Korundausbeute (mit wie ohne Zr⁴⁺ ergeben sich 88-90 % Korund bei 1250 °C; Zh. Prikladnoy Khimii 55(1982)9, 1946-51), wogegen Xue u.a. unter Wirkung des als Oxychlorid zugesetzten ZrO₂ eine von 1216 °C auf 1291 °C erhöhte Transformationstemperatur finden, also eine erschwerte Korundbildung (J. Mater. Sci. Lett. 11(1992)8, 443-445).

Im Rahmen der vorliegenden Erfindung wird dagegen bei Einführung von Zr bzw. ZrO₂ in die Sol/Gel-Technologie ausgehend von dem o.a. Böhmit "Disperal" schon bei 1150 °C eine sehr hohe Korundausbeute erzielt und ab ca. 1200 °C nur noch Korund erhalten, was im Gegensatz zu vorbekannten Ergebnissen eher auf eine transformationsbeschleunigende Wirkung dieser Art Dotierung deutet.

Ein besonderer Vorteil der Erfindung ist es, dass mesoporöse Aluminiumoxidstrukturen hoher Porosität (> 30 %, vorzugsweise > 40 %) hergestellt werden können, die bei mittleren Porengrößen von 20 - 60 nm aus Korund bestehen.

Ein weiterer besonderer Vorteil der Erfindung ist, dass die erfindungsgemäßen Strukturen mit den angegebenen Eigenschaften gleichermaßen mittels pulvertechnischer Technologien wie auch durch Sol-Gel-Technologien herstellbar sind.

Die erfindungsgemäß mit Sol/Gel- oder Pulvertechnologien hergestellten Al₂O₃₋Strukturen gröberer Porenstruktur, nutzbar z.B. für gröberstrukturierte Zwischenschichten oder Substrate, weisen folgende Merkmale auf:
- eine offene Porosität > 35 %, vorzugsweise > 40 %,
- mittlere Porengrößen von 50-1000 nm, vorzugsweise von 100-500 nm,
- einen Zr-Gehalt, der ausgedrückt als ZrO₂ und bezogen auf Al₂O₃ 0,03 - < 5 Masse-% ZrO₂ beträgt.

Die Realisierung mesoporöser Al₂O₃-Strukturen speziell aus chemisch und thermodynamisch hochstabilem Korund (α-Al₂O₃) stellt gemessen am bekannten Stand der Technik eine besondere Schwierigkeit dar: im Rahmen von Sol/Gel-Verfahren erfordert die Korundbildung bestimmte mindestens einzuhaltende Glühtemperaturen, während alternativ beim Einsatz hochsinteraktiver Nanokorundpulver mit einer schnellen Versinterung infolge von deren hoher Sinteraktivität (resultierend aus den kleinen Krümmungsradien der Partikeloberflächen) zu rechnen ist. In beiden Fällen ist ein schneller Abbau der offenen Porosität beim Glühen (Kalzinieren, Sintern) die Folge. Die erfindungsgemäße Dotierung wirkt dem entgegen und ermöglicht die Herstellung mesoporöser Strukturen hoher Porosität, die den Vorteil einer Korundstruktur aufweisen. Die Nutzbarkeit gleichermaßen für Sol/Gelwie für Pulvertechnologien ist hierbei offenkundig.
Dagegen muß für gröberstrukturierte Zwischenschichten oder Substrate, deren Porengrößen vorzugsweise zwischen 100 und 500 nm liegen, der Vorzug einer Phasenstruktur als Korund nicht gesondert betont werden: zwar ist Korund auch hier von besonderem Vorteil, ergibt sich jedoch quasi selbstverständlich mit der im Rahmen der Erfindung problemlosen Nutzung kommerzieller Korundpulver bzw. der mit der Dotierung ermöglichten Glühung sol/gel-abgeleiteter Produkte bei Temperaturen oberhalb der Korundbildungstemperatur.
Die Nutzbarkeit der Erfindung im Rahmen von Sol/Gel-Verfahren stellt hier einen besonderen Vorteil dar, da solche Strukturen bisher per Sol/Gel nicht herstellbar sind. Der Vorteil speziell von Korundprodukten für viele Anwendungen schränkt jedoch anderseits die Nutzbarkeit der erfindungsgemäßen Dotierung für andere Zwecke (wo z.B. für Katalysator-Substrate andere Al₂O₃-Phasen als Korund zweckdienlicher sein können) nicht ein. So ist im Rahmen des erfindungsgemäßen Verfahrens auch die Stabilisierung einer hohen Porosität und optimierte Einstellung bestimmter Porengrößen für Al₂O₃-Produkte anderer Phasenzusammensetzung als Korund möglich.

Wenn die erfindungsgemäße Dotierung zur Aufrechterhaltung einer hohen Porosität bei der herstellungsbedingten Glühung bis hin zu hohen Temperaturen führt, so ergibt sich daraus ein zusätzlicher Vorteil für die Anwendbarkeit der porösen Produkte im Bereich hoher Temperaturen.

Im weiteren wird die Erfindung an Ausführungsbeispielen für Sol/Gel- und für pulvertechnische Verfahren näher erläutert. Dabei sind die Beispiele für pulvertechische Verfahren mit einer breiten Palette unterschiedlicher Korundrohstoffe mit mittleren Partikelgrößen zwischen 50 nm und 1,5 µm erläutert.

### Beispiel 1

### (Sol/Gel-Technologie; 50-200 nm Porengröße)

Als Rohstoff zur Sol/Gel-Herstellung gröberstrukturierter Filtrationsschichten wurde ein Böhmit der Fa. Condea Chemie (Hamburg) mit der Bezeichnung Disperal verwendet. Dieser Böhmit ist ein kolloidal-disperses Aluminiummonohydrat (AIOOH), dessen spezifische Oberfläche, bestimmt nach der BET-Methode, 188 m²/g beträgt. Die Primärteilchengröße nach TEM-Aufnahmen beträgt ca. 2-7 nm, während Größenverteilungen, wie sie in Suspensionen gemessen werden, agglomerationsbedingt mittlere Partikelgrößen von 30-60 nm ergeben.

100 g dieses Böhmits wurden unter Einsatz von Rührwerk und Ultraschall 30 Minuten in 180 ml destilliertem Wasser bei pH = 3 dispergiert; der pH-Wert wurde durch Zusatz 10%iger Salpetersäure eingestellt. Nach Zugabe von 2,7 g ZrOCl₂ · 8H₂O als Lösung in 20 ml destilliertem Wasser wurde das Sol eine weitere Stunde im Ultraschallbad gerührt und anschließend als 5 mm dicke Schicht in eine Glasschale gegossen. Nach 12stündiger Trocknung im Trockenschrank bei 80 °C wurde das erhaltene Gel gebrochen und durch Siebung in ein Granulat mit 1-2 mm Korngröße überführt. Der Zr-Gehalt betrug ausgedrückt als Oxid 1,2 Ma.-% ZrO₂ bezogen auf Al₂O₃.

Die getrockneten Proben wurden drucklos an Luft gesintert. Die Aufheizrate betrug bis 550 °C 3 K/min und anschließend 5 K/min bis zur jeweiligen Sintertemperatur, wo sich eine isotherme Haltedauer von 2 h anschloß. Die Bestimmung der offenen Porosität und der Porengröße erfolgte mittels Hg-Porosimetrie.

Sinterungen bei Endtemperaturen zwischen 1215 und 1370 °C führten zu einer Vervierfachung der mittleren Porengröße bei im Bereich von 40,65 ± 0,59 Vol.-% konstanter offener Porosität; alle Proben erwiesen sich in der röntgenographischen Phasenanalyse als vollständig zu Korund (α-Al₂O₃) transformiert.

| Sintertemperatur in °C | 1215 | 1235 | 1260 | 1300 | 1350 | 1370 |
|---|---|---|---|---|---|---|
| offene Porosität in % | 41,2 | 40,6 | 40,2 | 40,0 | 41,5 | 40,5 |
| Gesamt-Porosität in % | 42,9 | 43,5 | 42,8 | 41,8 | 43,9 | 42,0 |
| mittlere Porengröße ln nm | 56 | 63 | 73 | 96 | 196 | 199 |

Als Vergleich wurde ein Versuch ohne Hinzufügen des ZrO₂ unter ansonsten gleichen Bedingungen durchgeführt. Die offene Porosität betrug nach Sinterung bei 1000 °C noch 49,7 % (bei einer mittleren Porengröße von 12 nm), war aber schon bei 1200 °C und Porengröße 13 nm auf nur 36 % gesunken. Weitere Vergleichsversuche wurden mit Dotierungen wie La, Si, Ca und Mg, wie sie zur Vermeidung des Porositätsabbaus bei höherer Temperatur vorgeschlagen wurden (K.J. McLaughlin u.a., US - 5 837 634), durchgeführt. All diese Zusätze führten jedoch stets zu Porengrößen < 70 nm bei Porositäten ≤ 30 %, während wenig höhere Porositäten ≤ 35 % nur mit noch kleineren Poren < 15 nm realisiert werden konnten.

### Beispiel 2

### (Keramik mit Poren der Größe 100-350 nm, hergestellt aus gröberen Tonerden)

Die kommerziell erhältlichen Tonerden A16SG (mittlere Korngröße ca. 0,5 µm) und CT1200 (Korngröße ca. 1,4 µm, beide Sorten von Fa. Alcoa, USA) wurden 30 Minuten in destilliertem Wasser und unter Zusatz bekannter Dispergiermittel (HNO₃, Dolapix CE 64 der Fa. Zschimmer & Schwarz) mittels Rührwerk und Ultraschall dispergiert.

Eine zusätzliche Dispergierungsmahlung in einer Laborrührwerkskugelmühle erfolgte unter Verwendung einer 3Y-TZP-Mahlgarnitur (Y-teilstabilisiertes ZrO₂, Fa. Tosoh, Japan) zur Einbringung der ZrO₂-Dotierung als Mahlkugelabrieb; die Laufzeit betrug bei den A16SG-Versätzen 2 h mit Feststoffgehalten von 60-75 Ma.-%, während Versätze mit 60 Ma.-% der gröberen Tonerde CT1200 für 4 h und solche mit 71 Ma.-% CT1200 für 1 h gemahlen wurden. Auf diese Weise wurden unterschiedliche Gehalte der ZrO₂-Dotierung erzielt. Eine undotierte Vergleichsprobe aus A16SG-Tonerde wurde ohne Mahlung nur eine Stunde mittels Ultraschalldispergator beschallt.
Alle Suspensionen wurden mit 5 mm Schichtdicke in einer Glasschale ausgegossen und nach 24stündiger Trocknen bei 60 °C durch Siebung granuliert wie in Beispiel 1 beschrieben. Das Sintern sowie die Ermittlung von Porosität und Porengröße erfolgten wie in Beispiel 1.

Sinterungen bei Endtemperaturen von 1200 und 1300 °C führten im Ergebnis der ZrO₂-Dotierung zu hochporösen Korund-Produkten mit dotierungsbedingt vergrößerten Poren, wie der Vergleich mit der ZrO₂-freien Zusammensetzung zeigt. Die folgende Übersicht gibt zunächst die offene Porosität in Vol.-% und nach dem Schrägstrich die mittlere Porengröße in nm an.

| ZrO₂-Konzentration (eingebracht als Mahlkugelabrieb; Genauigkeit ± 0,1%) | Tonerde A16SG gesintert 1200 °C | Tonerde A16SG Gesintert 1300 °C | Tonerde CT1200 gesintert 1300 °C |
|---|---|---|---|
| 0 | 22,1 % / 87 nm | ----- | ----- |
| 0,8 % | 46,1 % / 126 nm | 34,2 % / 121 nm | 34,3 % / 276 nm |
| 2,4% | ----- | 44,6 % / 146 nm | ----- |
| 4,5% | ----- | ----- | 51,0%/315nm |

### Beispiel 3

### (Korund-Membran mit 50-nm-Poren, hergestellt aus kommerziellem Korundpulver)

100 g der feinkörnigen Korund-Tonerde Taimicron TM-DAR (Böhringer-Taimei, Japan) (mittlere Korngröße ca. 0,2 µm) wurden unter Einsatz von Ultraschall und Rührwerk 30 min in 35 ml destilliertem Wasser bei pH = 4 dispergiert; der pH-Wert wurde wieder durch Zusatz von Salpetersäure eingestellt. Nach der Zugabe von 2,7 g ZrOCl₂ · 8H₂O als Lösung in 5 ml destilliertem Wasser wurde die Suspension 2 h im Ultraschallbad gerührt und als 5 mm dicke Schicht in einer Glasschale ausgegossen, 12 h bei 80 °C getrocknet und anschließend durch Siebung granuliert wie in Beispiel 1 beschrieben. Der Zr-Gehalt betrug ausgedrückt als Oxid 1,2 Ma.-% ZrO₂ bezogen auf Al₂O₃ wie in Beispiel 1. Das Sintern sowie die Ermittlung von Porosität und Porengröße erfolgten wie in Beispiel 1.

Die Verwendung des kommerziellen Korundpulvers als Rohstoff garantiert eine Produktstruktur aus reinem Korund, die auch röntgenographisch überprüft wurde. Die erfindungsgemäße Zr-Dotierung bewirkt eine gleichbleibend hohe offene Porosität und konstante Porengröße über einen größeren Bereich von Glühtemperaturen:

| | | | |
|---|---|---|---|
| - 800 °C: | offene Porosität | 41,2 Vol.-%, | mittlere Porengröße 48 nm, |
| - 1000 °C: | offene Porosität | 39,1 Vol.-%, | mittlere Porengröße 49 nm, |
| - 1100 °C: | offene Porosität | 39,3 Vol.-%, | mittlere Porengröße 51 nm. |

Ein Vergleichsversuch ohne Zr-Dotierung unter ansonsten gleichen Bedingungen führte zu Strukturen, die trotz ihrer Beschränkung auf nur kleinere realisierbare Poren ≤ 40 nm dennoch stets eine geringere, unbefriedigende Porosität ≤ 32 % aufwiesen.

### Beispiel 4

### (Poröse Korund-Keramik mit 50-nm-Poren, hergestellt aus Nano-Korund)

Verwendet wurde ein Nanokorund-Pulver wie in DE 199 22 492 beschrieben; die Partikelgröße betrug 50-100 nm. Zur Aufbereitung der Suspension wurde das Korundpulver in Wasser bei pH = 4 durch Mahlung dispergiert, die erfindungsgemäße Dotierung erfolgte durch Zurieb von den verwendeten 3Y-TZP-Mahlkugeln (Y-teilstabilisiertes ZrO₂, Fa. Tosoh, Japan). Die ursprüngliche Mahlsuspension hatte eine Feststoffgehalt von 33 Masse-%, nach 3stündiger Mahlung, verbunden mit einem ZrO₂-Zurieb von 0,6 Masse-% (bezogen auf den Al₂O₃-Feststoff), wurde die Suspension auf 20 Masse-% verdünnt und unter permanenter Nachregulierung des pH-Wertes auf 4,0 eine weitere Stunde im Ultraschallbad gerührt. Die Suspension wurde anschließend als 2-3 mm dicke Schicht in einer Glasschale ausgegossen und 12 h bei 90 °C getrocknet. Der Trocknung schloß sich eine 2stündige isotherme Sinterung an Luft bei 1100°C bzw. 1200°C an.
Die Ermittlung von Porosität und Porengröße erfolgten wie in Beispiel 1.

Der erfindungsgemäß mit ZrO₂ dotierte Versatz zeigt nach Glühung folgende Porenstrukturen:

| | | | |
|---|---|---|---|
| - 1100 °C: | offene Porosität | 43,7 Vol.% (Gesamtporosität 51,4 %), mittlere Porengröße | 47 nm, |
| - 1200 °C: | offene Porosität | 41,1 Vol.% (Gesamtporosität 44,5 %) mittlere Porengröße | 55 nm |

## Patentansprüche

1. Poröse Aluminiumoxidstrukturen, die bei Temperaturen von größer 800 bis 1370 °C gesintert worden sind, enthaltend eine homogen verteilte Zr-haltige Dotierung in einer Konzentration, die ausgedrückt als ZrO₂ und bezogen auf Al₂O₃ 0,03 - < 5 Masse-% ausmacht, mit einer offenen Porosität von > 30 % und einer mittleren Porengröße von 20-1000 nm.

2. Poröse Aluminiumoxidstrukturen nach Anspruch 1, ganz, im wesentlichen ganz oder teilweise bestehend aus α-Al₂O₃ und enthaltend eine Zr-haltige Dotierung in einer Konzentration, die ausgedrückt als ZrO₂ und bezogen auf Al₂O₃ 0,03 - < 5 Masse-% ausmacht, mit einer offenen Porosität von > 30 %, vorzugsweise > 40 %, und einer mittleren Porengröße von 20 - 60 nm.

3. Poröse Aluminiumoxidstrukturen nach Anspruch 1, enthaltend eine Zr-haltige Dotierung in einer Konzentration, die ausgedrückt als ZrO₂ und bezogen auf Al₂O₃ 0,03 - < 5 Masse-% ausmacht, mit einer offenen Porosität von > 30 %, vorzugsweise > 40 %, und einer mittleren Porengröße von 50 - 1000 nm.

4. Poröse Aluminiumoxidstrukturen nach einem der Ansprüche 1 bis 3, bei denen die als ZrO₂ ausgedrückte Konzentration der Dotierung zwischen 0,03 und 1,5 Masse-% liegt.

5. Verfahren zur Herstellung von porösen Aluminiumoxidstrukturen nach einem der Ansprüche 1 bis 4, bei dem die Zr-haltige Dotierung im Rahmen pulvertechnischer oder Sol/Gel-Prozesse als ZrO₂ oder als Zr-haltige Verbindung in einer Konzentration hinzugefügt wird, die ausgedrückt als ZrO₂ und bezogen auf Al₂O₃ 0,03 - < 5 Masse-% ausmacht.

## Claims

1. Porous aluminium oxide structures which have been sintered at temperatures of greater than 800 up to 1370°C, containing a homogeneously distributed Zr-containing doping in a concentration which, expressed as ZrO₂ and based on Al₂O₃, amounts to 0.03 - < 5% by mass, with an open porosity of > 30% and a mean pore size of 20 - 1000 nm.

2. Porous aluminium oxide structures according to Claim 1, completely, substantially completely or partially comprising α-Al₂O₃ and containing a Zr-containing doping in a concentration which, expressed as ZrO₂ and based on Al₂O₃, amounts to 0.03 - < 5% by mass, with an open porosity of > 30%, preferably > 40%, and a mean pore size of 20 - 60 nm.

3. Porous aluminium oxide structures according to Claim 1, containing a Zr-containing doping in a concentration which, expressed as ZrO₂ and based on Al₂O₃, amounts to 0.03 - < 5% by mass, with an open porosity of > 30%, preferably > 40%, and a mean pore size of 50 - 1000 nm.

4. Porous aluminium oxide structures according to one of Claims 1 to 3, in which the concentration of the doping, expressed as ZrO₂, is between 0.03 and 1.5% by mass.

5. Process for producing porous aluminium oxide structures according to one of Claims 1 to 4, in which the Zr-containing doping is added, within powder-technology or sol/gel processes, as ZrO₂ or as Zr-containing compound, in a concentration which, expressed as ZrO₂ and based on Al₂O₃, amounts to 0.03 - < 5% by mass.

## Revendications

1. Structures poreuses en oxyde d'aluminium qui ont été frittées à des températures supérieures à 800 - 1 370°C, qui comprennent un dopage réparti de manière homogène et contenant du Zr à une concentration qui, exprimée en termes de ZrO₂ et rapportée à Al₂O₃, représente de 0,03 à < 5 % en masse et avec une porosité ouverte > 30 % et des pores d'une taille moyenne de 20 à 1 000 nm.

2. Structures poreuses en oxyde d'aluminium selon la revendication 1, entièrement, essentiellement entièrement ou partiellement constituées d'α-Al₂O₃ et contenant un dopage contenant du Zr à une concentration qui, exprimée en termes de ZrO₂ et rapportée à Al₂O₃, représente de 0,03 à < 5 % en masse, avec une porosité ouverte de > 30 %, de préférence > 40 % et des pores d'une taille moyenne de 20 à 60 nm.

3. Structures poreuses en oxyde d'aluminium selon la revendication 1, qui contiennent un dopage qui contient du Zr, à une concentration qui, exprimée en termes de ZrO₂ et rapportée à Al₂O₃, représente de 0,03 à < 5 % en masse, avec une porosité ouverte de > 30 %, et de préférence > 40 % et des pores d'une taille moyenne de 50 à 1 000 nm.

4. Structures poreuses en oxyde d'aluminium selon l'une des revendications 1 à 3, dans lesquelles la concentration du dopage exprimée en termes de ZrO₂ est comprise entre 0,03 et 1,5 % en masse.

5. Procédé de fabrication de structures poreuses d'oxyde d'aluminium selon l'une des revendications 1 à 4, dans lequel le dopage contenant du Zr est ajouté dans le cadre d'opérations de la technique des poudres et/ou de sol/gel, sous la forme de ZrO₂ ou d'un composé qui contient du Zr, à une concentration qui, exprimée en termes de ZrO₂ et rapportée à Al₂O₃, représente de 0,03 à < 5 % en masse.
